(19) **Europäisches Patentamt**
**European Patent Office**
**Office européen des brevets**

(11) **EP 4 787 082 A1**

(12) **EUROPEAN PATENT APPLICATION**
published in accordance with Art. 153(4) EPC

(43) Date of publication:
05.08.2026 Bulletin 2026/32

(21) Application number: 24901180.0

(22) Date of filing: 13.11.2024

(51) International Patent Classification (IPC):
*G03H 1/26* (2006.01)   *G03H 1/04* (2006.01)
*G03H 1/12* (2006.01)   *G03H 1/02* (2006.01)

(52) Cooperative Patent Classification (CPC):
G03H 1/02; G03H 1/04; G03H 1/12; G03H 1/26

(86) International application number:
PCT/KR2024/096506

(87) International publication number:
WO 2025/121994 (12.06.2025 Gazette 2025/24)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 08.12.2023 KR 20230177809

(71) Applicant: Samsung Electronics Co., Ltd.
Suwon-si, Gyeonggi-do 16677 (KR)

(72) Inventors:
• LEE, Dukho
Suwon-si, Gyeonggi-do 16677 (KR)

• MOON, Seokil
Suwon-si, Gyeonggi-do 16677 (KR)
• JO, Youngjin
Suwon-si, Gyeonggi-do 16677 (KR)
• KOO, Bonkon
Suwon-si, Gyeonggi-do 16677 (KR)
• LEE, Kyookeun
Suwon-si, Gyeonggi-do 16677 (KR)
• JEONG, Youngmo
Suwon-si, Gyeonggi-do 16677 (KR)
• CHOI, Jongchul
Suwon-si, Gyeonggi-do 16677 (KR)

(74) Representative: Appleyard Lees IP LLP
G Mill
Dean Clough Industrial Park
Halifax HX3 5AH (GB)

(54) **METHOD FOR PROVIDING HOLOGRAM IMAGE, AND ELECTRONIC DEVICE FOR SUPPORTING SAME**

(57)    An electronic device according to one embodiment may comprise: a light source; a spatial light modulator configured to modulate light emitted from the light source; a mask configured to modulate the light modulated by the spatial light modulator; a memory; and at least one processor. The at least one processor may obtain a target hologram image, and obtain a plurality of holograms by performing training on the basis of alignment errors that can occur between the spatial light modulator and the mask. The at least one processor may control the spatial light modulator to output a pattern on the basis of the plurality of obtained holograms such that the light emitted from the light source is modulated. The light modulated by the spatial light modulator may be modulated by means of the mask to sequentially form a plurality of hologram images corresponding to the plurality of holograms within a preset time.

FIG. 5

## Description

[Technical Field]

The disclosure relates to a method for providing a hologram image and an electronic device supporting the same.

[Background Art]

A holographic display method may be a three-dimensional image display method capable of matching the depth perception recognized by the brain with the focus of the eye and providing full parallax. A holographic display method may be a method of reproducing a three-dimensional image by providing a computer generated hologram (CGH) signal to a spatial light modulator, and diffracting reference light by a hologram pattern output by the spatial light modulator based on the CGH signal.

Recently, research on a holographic display method using a spatial light modulator and a mask having a pixel pitch smaller than the pixel pitch of the spatial light modulator and capable of modulating light modulated by the spatial light modulator has been actively conducted.

The holographic display method using the spatial light modulator and the mask may have an advantage of extending a field of view (also referred to as "FOV") and/or a viewing area (also referred to as "eyebox") compared to a holographic display method of modulating light (e.g., reference light) using only the spatial light modulator.

[Detailed Description of the Invention]

[Technical Solution]

In the holographic display method using the spatial light modulator and the mask, the mask may be a mask having a fine periodic structure of about 1 $\mu$m to about 4 $\mu$m (e.g., a mask having a horizontal length of about 1 $\mu$m to about 4 $\mu$m and a vertical length of about 1 $\mu$m to about 4 $\mu$m). The mask may scatter incident light randomly (e.g., in irregular directions), like frosted glass. Based on the position of the spatial light modulator, the position of the mask, and information about the mask (e.g., the degree of amplitude and/or phase by which the mask modulates incident light, or the structure of pixels constituting the mask), by performing an inverse compensation operation on a target hologram image (e.g., a hologram image that a user intends to reproduce through a holographic display device), an electronic device (e.g., a holographic display device) may be enabled to reproduce a clearer hologram image.

However, the conditions (and environments) assumed in the inverse compensation operation on the target hologram image may differ from the actual conditions of the electronic device (e.g., the holographic display device). For example, the actual structure of the mask and the actual structure of the mask assumed in the inverse compensation operation may differ. For example, the actual alignment between the spatial light modulator and the mask (e.g., the actual positional relationship between the spatial light modulator and the mask, or the actual alignment error between the spatial light modulator and the mask) may differ from the alignment (e.g., alignment error) between the spatial light modulator and the mask assumed in the inverse compensation operation. For example, while using the electronic device (e.g., the holographic display device), as the alignment between the spatial light modulator and the mask changes due to heat generation, external temperature, or impact with an external object, the actual conditions of the electronic device, which were identical to the conditions assumed in the inverse compensation operation, may also change. In such a case, the quality of the hologram image reproduced through the electronic device may be degraded.

The disclosure relates to a method for providing a hologram image capable of minimizing a loss between a reproduced hologram image and a target hologram image considering alignment errors that can occur between the spatial light modulator and the mask, and an electronic device supporting the same.

An electronic device according to an embodiment may include a light source, a spatial light modulator configured to modulate light emitted from the light source, a mask configured to modulate light modulated by the spatial light modulator, memory, and at least one processor. The at least one processor may obtain a plurality of holograms by performing training based on a target hologram image and alignment errors that can occur between the spatial light modulator and the mask. The at least one processor may control the spatial light modulator to output a pattern based on the obtained plurality of holograms such that the light emitted from the light source is modulated. The light modulated by the spatial light modulator may be modulated by the mask such that a plurality of hologram images corresponding to the plurality of holograms are sequentially formed within a preset time.

A method for providing a hologram image in an electronic device according to an embodiment may include an operation of obtaining a plurality of holograms by performing training based on a target hologram image and alignment errors that can occur between the spatial light modulator and the mask of the electronic device, and an operation of controlling the spatial light modulator to output a pattern based on the obtained plurality of holograms such that the light emitted from the light source is modulated. The light modulated by the spatial light modulator may be modulated by the mask such that a plurality of hologram images corresponding to the plurality of holograms are sequentially formed within a preset time.

An electronic device according to an embodiment may include a light source emitting light, a spatial light modulator configured to modulate light emitted from the light source, a mask configured to modulate light modulated by the spatial light modulator, memory, and at least one processor. The at least one processor may obtain a plurality of holograms using an artificial intelligence model based on a target hologram image. The at least one processor may control the spatial light modulator to output a pattern based on the obtained plurality of holograms such that the light emitted from the light source is modulated. The light modulated by the spatial light modulator may be modulated by the mask such that a plurality of hologram images corresponding to the plurality of holograms are sequentially formed within a preset time. The artificial intelligence model may be trained using an input hologram image as input data and using a plurality of first holograms obtained by performing training based on the input hologram image and alignment errors that can occur between the spatial light modulator and the mask as a ground truth.

In an embodiment, in a non-transitory computer-readable medium storing computer-executable instructions, the computer-executable instructions may, when executed by at least one processor, cause an electronic device to obtain a plurality of holograms by performing training based on a target hologram image and alignment errors that can occur between a spatial light modulator of the electronic device and a mask of the electronic device. The computer-executable instructions may, when executed by the at least one processor, control the spatial light modulator to output a pattern based on the obtained plurality of holograms such that the light emitted from the light source is modulated. The light modulated by the spatial light modulator may be modulated by the mask such that a plurality of hologram images corresponding to the plurality of holograms are sequentially formed within a preset time.

[Brief Description of Drawings]

FIG. 1 is a view illustrating a structure of an electronic device according to an embodiment.
FIG. 2 is a view illustrating an electronic device according to an embodiment.
FIG. 3 is a block diagram illustrating an electronic device according to an embodiment.
FIG. 4 is a view illustrating a mask according to an embodiment.
FIG. 5 is a flowchart illustrating a method for providing a hologram image according to an embodiment.
FIG. 6 is a flowchart illustrating a method for obtaining a plurality of holograms according to an embodiment.
FIG. 7 is a view illustrating a method for obtaining a plurality of holograms according to an embodiment.
FIGS. 8A and 8B are views illustrating alignment errors that can occur between the spatial light modulator and the mask according to an embodiment.
FIG. 9 is a view illustrating a method for obtaining a loss function according to an embodiment.
FIG. 10 is a view illustrating a method for setting a light propagation framework based on a phase error of the mask according to an embodiment.
FIG. 11 is a view illustrating a method for obtaining a single hologram according to an embodiment.
FIG. 12 is a view illustrating a method for providing a hologram image according to an embodiment.
FIG. 13 is a flowchart illustrating a method for providing a hologram image according to an embodiment.
FIG. 14 is a view illustrating a method for obtaining an artificial intelligence model according to an embodiment.
FIG. 15 is a view illustrating hologram images reproduced through a comparative example according to an embodiment.
FIG. 16 is a view illustrating hologram images reproduced based on an operation of providing a hologram according to an embodiment.

[Mode for Carrying out the Invention]

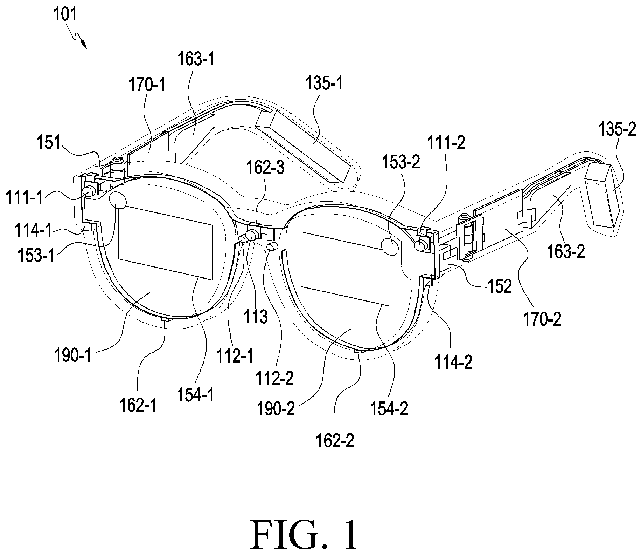

FIG. 1 is a view illustrating a structure of an electronic device 201 according to an embodiment.

Referring to FIG. 1, in an embodiment, an electronic device 101 may include one or more first cameras 111-1 and 111-2, one or more second cameras 112-1 and 112-2, and one or more third cameras 113. In an embodiment, an image obtained through the one or more first cameras 111-1 and 111-2 may be used for hand gesture detection by a user, head tracking of the user, and/or spatial recognition. In an embodiment, the one or more first cameras 111-1 and 111-2 may be global shutter (GS) cameras.

In an embodiment, the one or more first cameras 111-1 and 111-2 may perform simultaneous localization and mapping (SLAM) computation through depth imaging. In an embodiment, the one or more first cameras 111-1 and 111-2 may perform spatial recognition for six degrees of freedom (6DoF).

In an embodiment, an image obtained through the one or more second cameras 112-1 and 112-2 may be used for detecting and tracking a pupil of the user. In an embodiment, the one or more second cameras 112-1 and 112-2 may be GS cameras. In an embodiment, the one or more second cameras 112-1 and 112-2 may respectively correspond to a left eye and a right eye, and the performance of the one or more second cameras 112-1 and 112-2 may be the same.

In an embodiment, the one or more third cameras 113 may be high-resolution cameras. In an embodiment, the one or more third cameras 113 may perform an auto-focusing (AF) function and a shake correction function. In an embodiment, the one or more third cameras 213 may be GS cameras or rolling shutter (RS) cameras.

In an embodiment, the electronic device 101 may include one or more light emitting elements 114-1 and 114-2. In an embodiment, the light emitting elements 114-1 and 114-2 may be different from a light source, which is described below, that radiates light to a screen output area of a display. In an embodiment, the light emitting elements 114-1 and 114-2 may radiate light to facilitate pupil detection when detecting and tracking a pupil of the user through the one or more second cameras 112-1 and 112-2.

In an embodiment, the light emitting elements 114-1 and 114-2 may each include a light emitting diode (LED). In an embodiment, the light emitting elements 114-1 and 114-2 may radiate light in an infrared region. In an embodiment, the light emitting elements 114-1 and 114-2 may be attached around a frame of the electronic device 101. In an embodiment, the light emitting elements 114-1 and 114-2 may be located around the one or more first cameras 111-1 and 111-2, and may assist gesture detection, head tracking, and/or spatial recognition by the one or more first cameras 111-1 and 111-2 when the electronic device 101 is used in a dark environment. In an embodiment, the light emitting elements 114-1 and 114-2 may be located around the one or more third cameras 113, and may assist image acquisition by the one or more third cameras 113 when the electronic device 101 is used in a dark environment.

In an embodiment, the electronic device 101 may include batteries 135-1 and 135-2. The batteries 135-1 and 135-2 may store power for operating the remaining components of the electronic device 101.

In an embodiment, the electronic device 101 may include a first display 151, a second display 152, one or more input optical members 153-1 and 153-2, one or more transparent members 190-1 and 190-2, and one or more screen display portions 154-1 and 154-2.

In an embodiment, the first display 151 and the second display 152 may include, e.g., a liquid crystal display (LCD), a digital mirror device (DMD), a liquid crystal on silicon (LCoS), an organic light emitting diode (OLED), or a micro light emitting diode (micro LED).

In an embodiment, when the first display 151 and the second display 152 are formed of one of the liquid crystal display, the digital mirror device, or the liquid crystal on silicon, the electronic device 101 may include a light source that radiates light to a screen output area of the display. In an embodiment, when the first display 151 and the second display 152 may generate light by themselves (e.g., when formed of one of the organic light emitting diode or the micro light emitting diode), the electronic device 101 may provide a virtual image of relatively good quality to the user without including a separate light source.

In an embodiment, the one or more transparent members 190-1 and 190-2 may be disposed to face the eye of the user when the user wears the electronic device 101. In an embodiment, the one or more transparent members 190-1 and 190-2 may include at least one of a glass plate, a plastic plate, or a polymer. In an embodiment, the user may view the outside world through the one or more transparent members 190-1 and 190-2 when wearing the electronic device 101. In an embodiment, the one or more input optical members 153-1 and 153-2 may guide the light generated by the first display 151 and the second display 152 to the eye of the user. In an embodiment, an image based on the light generated by the first display 151 and the second display 152 may be formed on the one or more screen display portions 154-1 and 154-2 on the one or more transparent members 190-1 and 190-2, and the user may view the image formed on the one or more screen display portions 154-1 and 154-2.

In an embodiment, the electronic device 101 may include one or more audio input devices 162-1, 162-2, and 162-3 and one or more audio output devices 163-1 and 163-2.

In an embodiment, the electronic device 101 may include a first PCB 170-1 and a second PCB 170-2. The first PCB 170-1 and the second PCB 170-2 may be configured to transmit electrical signals to components included in the electronic device 101, such as the one or more first cameras 111-1 and 111-2, the one or more second cameras 112-1 and 112-2, the one or more third cameras 113, displays, an audio module, and a sensor. In an embodiment, the first PCB 170-1 and the second PCB 170-2 may include a flexible printed circuit board (FPCB). In an embodiment, the first PCB 170-1 and the second PCB 170-2 may each include a first substrate, a second substrate, and an interposer disposed between the first substrate and the second substrate.

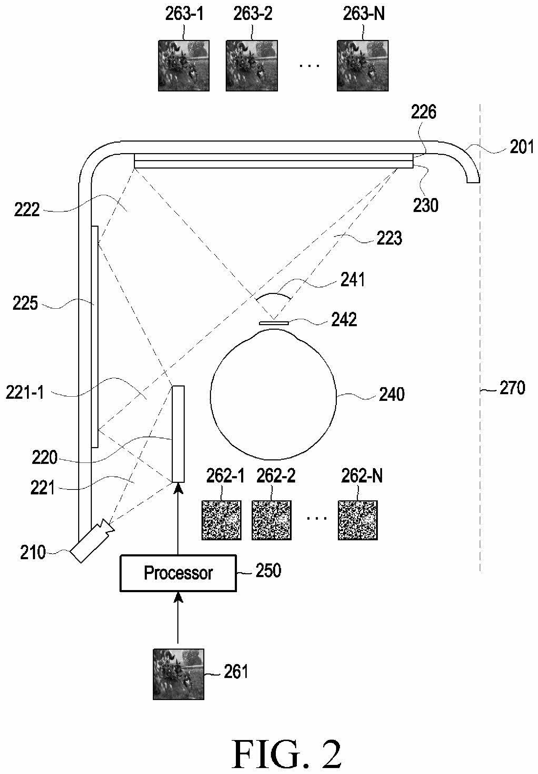

FIG. 2 is a view illustrating an electronic device 201 according to an embodiment.

Referring to FIG. 2, in an embodiment, the electronic device 201 may be a head-mounted display (HMD) device (e.g., an augmented reality (AR) glass, a virtual reality (VR) glass) capable of reproducing a hologram image.

In an embodiment, the electronic device 201 may include a light source 210, a spatial light modulator 220, a mirror 225, a holographic optical element 226, and/or a mask 230.

In an embodiment, the light source 210 may emit light 221. For example, the light source 210 may include a laser diode capable of generating coherent light (e.g., laser light). However, the light source 210 is not limited to the laser diode emitting coherent light. For example, the light source 210 may include a light emitting diode (LED). Further, the light output from the light source 210 is not limited to coherent light. For example, the light output from the light source 210 may include incoherent light.

In an embodiment, the light source 210 may include a plurality of light sources respectively emitting light of different wavelengths (e.g., red light, green light, and blue light). However, without being limited thereto, the light source 210 may include only one light source emitting light of a single wavelength.

In an embodiment, the spatial light modulator 220 may output a plurality of hologram patterns respectively corresponding to a plurality of holograms (hereinafter referred to as "plurality of holograms") (e.g., a computer generated hologram (CGH) signal, or data for the plurality of holograms) provided from a processor (e.g., the processor 350 to be described below), based on the plurality of holograms. For example, the spatial light modulator 220 may sequentially receive a plurality of holograms 262-1, 262-2, and 262-N from the processor. The spatial light modulator 220 may sequentially output a plurality of hologram patterns (not illustrated) respectively corresponding to the plurality of holograms 262-1, 262-2, and 262-N provided from the processor. However, the disclosure is not limited thereto. For example, the spatial light modulator 220 may sequentially receive the plurality of holograms 262-1, 262-2, and 262-N from the processor within a preset time, and then, under the control of the processor, sequentially output a plurality of hologram patterns respectively corresponding to the plurality of holograms 262-1, 262-2, and 262-N within the preset time. In an embodiment, the plurality of holograms 262-1, 262-2, and 262-N may be obtained considering alignment errors between the spatial light modulator 220 and the mask 230. The operation of obtaining the plurality of holograms is described below in detail.

In an embodiment, the spatial light modulator 220 may modulate light 221 incident from the light source 210. For example, the spatial light modulator 220 may modulate the amplitude and/or phase of the light 221 incident from the light source 210. For example, the spatial light modulator 220 may output the plurality of hologram patterns such that the light 221 incident from the light source 210 is modulated by the plurality of hologram patterns.

In an embodiment, the plurality of holograms provided from the processor to the spatial light modulator 220 may be holograms obtained (e.g., generated, calculated) by the processor based on a hologram image 261 (hereinafter referred to as "target hologram image") to be reproduced using the electronic device 201 (e.g., a hologram image that the user desires to reproduce through the electronic device 201). The operation in which the processor obtains the plurality of holograms is described below in detail.

In an embodiment, the mirror 225 may reflect the light 221 modulated by the spatial light modulator 220. For example, the mirror 225 may change the traveling direction of the light 221 such that the light 221 modulated by the spatial light modulator 220 is incident on the holographic optical element 226.

In an embodiment, the holographic optical element 226 may be an optical element that reflects light 222 incident from the mirror 225 and causes the reflected light to converge.

In an embodiment, the mask 230 may modulate incident light (e.g., the amplitude and/or phase of the light). A hologram image may be formed (also referred to as "reproduced") by the light modulated by the mask 230. For example, based on the spatial light modulator 220 sequentially outputting a plurality of hologram patterns corresponding to the plurality of holograms within a preset time, a plurality of hologram images 263-1, 263-2, and 263-N may be sequentially reproduced in space as virtual images by the light modulated by the mask 230.

In an embodiment, when the target hologram image 261 is a single image (e.g., a single frame), the plurality of hologram images 263-1, 263-2, and 263-N may be hologram images corresponding to a single target hologram image 261 and reproduced within a preset time. When the target hologram image includes a video including a plurality of frames, a plurality of hologram images may be reproduced within a preset time for each of the plurality of frames.

In an embodiment, in FIG. 2, reference numeral 241 may indicate a field of view (also referred to as "FOV"), and reference numeral 242 may indicate a viewing area (also referred to as "eyebox").

Although FIG. 2 illustrates a portion of the electronic device 201 (e.g., components corresponding to the left side of the electronic device 201) that allows the user to view a hologram image through a left eye 240, the electronic device 201 may further include a portion of the electronic device 201 (e.g., components corresponding to the right side of the electronic device 201 that are symmetrically implemented with respect to an axis 270 with the components corresponding to the left side of the electronic device 201) that allows the user to view a hologram image through a right eye.

In an embodiment, the electronic device 201 may allow the user to view a hologram image of higher quality by sequentially reproducing a plurality of hologram images 263-1, 263-2, and 263-N corresponding to the target hologram image 261 within a preset time using the plurality of holograms 262-1, 262-2, and 262-N obtained considering alignment errors between the spatial light modulator 220 and the mask 230.

Although FIG. 2 illustrates that a plurality of hologram images are reproduced for a single target hologram image, without being limited thereto. For example, a single hologram image may be reproduced for a single target hologram image.

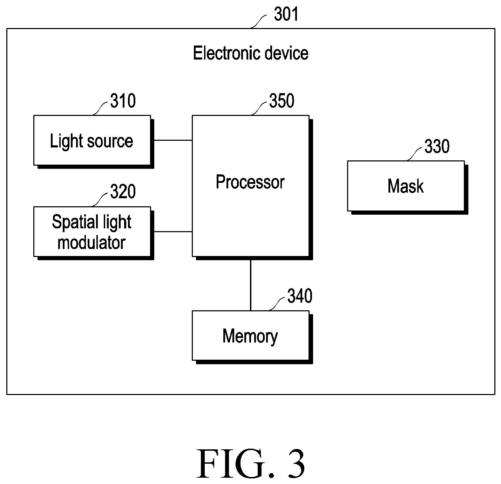

FIG. 3 is a block diagram illustrating an electronic device 301 according to an embodiment.

Referring to FIG. 3, in an embodiment, the electronic device 301 may be the electronic device 201 of FIG. 2 (e.g.,

an HMD device capable of reproducing a hologram image).

In an embodiment, the electronic device 301 may include a light source 310, a spatial light modulator 320, a mask 330, memory 340, and/or a processor 350.

In an embodiment, the light source 310 may include the light source 210 of FIG. 2. For example, the light source 310 may include a laser diode capable of generating coherent light (e.g., laser light). However, the light source 210 is not limited to the laser diode emitting coherent light. For example, the light source 210 may include a light emitting diode (LED). Further, the light output from the light source 210 is not limited to coherent light. For example, the light output from the light source 210 may include incoherent light.

In an embodiment, the light source 210 may include a plurality of light sources respectively emitting light of different wavelengths (e.g., red light, green light, and blue light). However, without being limited thereto, the light source 210 may include only one light source emitting light of a single wavelength.

In an embodiment, the spatial light modulator 320 may include the spatial light modulator 220 of FIG. 2.

In an embodiment, the spatial light modulator 320 may output a hologram pattern having an interference pattern for modulating incident light based on a hologram (e.g., a CGH signal) (also referred to as "hologram data") provided from the processor 350. The light incident on the spatial light modulator 320 may be diffracted and modulated by the hologram pattern.

In an embodiment, the spatial light modulator 320 may include a liquid crystal display (LCD) panel, a liquid crystal on silicon (LCoS) panel, or a digital micromirror display (DMD) panel. However, the spatial light modulator 320 is not limited to the examples.

In an embodiment, the mask 330 (referred to as "scattering mask" or "random mask") may include the mask 230 of FIG. 2.

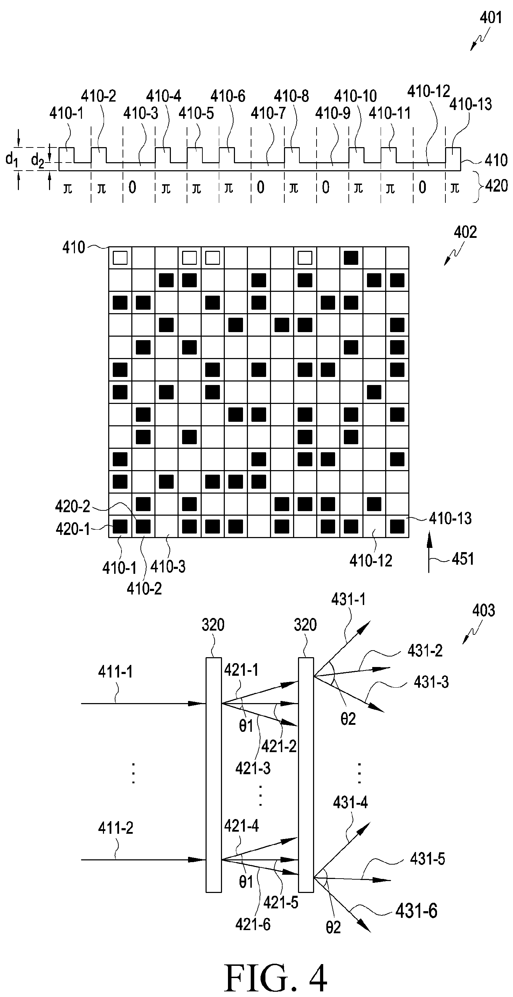

Hereinafter, the mask 330 is described in detail with reference to FIG. 4.

FIG. 4 is a view illustrating the mask 330 according to an embodiment.

Referring to FIG. 4, in an embodiment, reference numeral 401 may be a diagram illustrating a side surface of the mask 330 (e.g., a mask 410).

In an embodiment, the pixel pitch of the mask 410 may be smaller than the pixel pitch of the spatial light modulator 320. For example, each of a plurality of pixels included in the mask 410 may have a length (e.g., a horizontal length and/or a vertical length) (also referred to as "pixel pitch") of about 1 $\mu$m to about 4 $\mu$m.

In an embodiment, an arrangement of thicknesses of the plurality of pixels included in the mask 410 (e.g., thicknesses of irregularities of the plurality of pixels) may not be periodic. For example, the thicknesses of a plurality of pixels 410-1, 410-2, 410-3, 410-4, 410-5, 410-6, 410-7, 410-8, 410-9, 410-10, 410-11, 410-12, and 410-13 may be d1, d1, d2, d1, d1, d1, d2, d1, d2, d1, d1, d2, and d1 according to an arrangement order of the plurality of pixels. The pattern of thicknesses of the plurality of pixels 410-1, 410-2, 410-3, 410-4, 410-5, 410-6, 410-7, 410-8, 410-9, 410-10, 410-11, 410-12, and 410-13 consecutively disposed, such as d1, d1, d2, d1, d1, d1, d2, d1, d2, d1, d1, d2, and d1, may not be periodic. For example, the plurality of pixels may be implemented such that the thicknesses are irregular.

In an embodiment, when the pattern of thicknesses of the plurality of pixels included in the mask 410 is not periodic, the pattern of phases modulated by the plurality of pixels included in the mask 410 may also not be periodic. For example, the thicknesses of the plurality of pixels included in the mask 410 may correspond to phases 420 of light modulated by the plurality of pixels (e.g., amounts of phase to be modulated). For example, when the pattern of thicknesses of the plurality of pixels included in the mask 410 is not periodic, the phases of light modulated by the plurality of pixels may not be periodic, such as $\pi$ (radian), $\pi$, 0, $\pi$, $\pi$, $\pi$, 0, $\pi$, 0, $\pi$, $\pi$, 0, and $\pi$.

In an embodiment, although reference numeral 401 illustrates a mask 410 having pixels capable of changing the phase of light by one of two phases, such as 0 and $\pi$, without being limited thereto. For example, the mask 410 may include a mask having pixels capable of changing the phase of light by one of more than two phases (e.g., four phases such as 0, $\pi/2$, $-\pi/2$, and $\pi$).

In an embodiment, although reference numeral 401 illustrates the mask 410 capable of changing the phase of light, without being limited thereto. For example, the mask 330 may include a mask capable of changing the amplitude of light. For example, the mask 330 may include a mask capable of changing the amplitude and phase of light.

In an embodiment, reference numeral 402 may be a diagram illustrating a plane of the mask 330 (e.g., the mask 410). For example, reference numeral 401 may be a diagram illustrating the mask 410 viewed in a direction indicated by an arrow 451 in reference numeral 402. In the pixels of the mask 410 of reference numeral 402, black boxes 420-1 and 420-2 may indicate irregularities having a thickness of d1. In an embodiment, as illustrated in reference numeral 402, the pattern of thicknesses of the plurality of consecutively disposed pixels may not be periodic.

In an embodiment, the mask 410 may increase a field of view. For example, reference numeral 402 may be a diagram for describing a field of view formed by the spatial light modulator 320 and a field of view formed by the mask 410 when light is modulated by the spatial light modulator 320 and the mask 410. Light 421-1, 421-2, 421-3, 421-4, 421-5, and 421-6 may be formed when light 411-1 and 411-2 traveling in parallel is diffracted (and/or scattered) by the spatial light modulator 320. Light 431-1, 431-2, 431-3, 431-4, 431-5, and 431-6 may be formed when the light 421-1, 421-2, 421-3, 421-4, 421-5, and 421-6 diffracted (and scattered) by the spatial light modulator 320 is diffracted (and scattered) by the mask 410. In an embodiment, the ratio of the pixel pitch of the spatial light modulator 320 to the pixel pitch of the mask 410 may be substantially inversely proportional to the ratio of the field of view formed by the mask 410 to the field of view formed by the spatial light modulator 320. For example, when the pixel pitch of the spatial light modulator 320 is about twice the pixel pitch of the mask 410, the field of view $\theta2$ (or "diffusion angle") formed by the mask 410 may be about twice the field of view $\theta1$ formed by the spatial light modulator 320.

In an embodiment, the memory 340 may store information for performing an operation of providing a hologram. The information for performing the operation of providing a hologram stored by the memory 340 is described below in detail.

In an embodiment, the processor 350 may control the overall operation of providing a hologram. The processor 350 may include one or more processors for performing operations of providing a hologram. The operations of providing a hologram performed by the processor 350 is described with reference to FIGS. 4 to 16 below.

Although FIG. 3 illustrates that the electronic device 301 includes the light source 310, the spatial light modulator 320, the mask 330, the memory 340, and/or the processor 350, without being limited thereto. For example, the electronic device 301 may further include at least one of the components of the electronic device 101 of FIG. 1 and the components of the electronic device 301 of FIG. 2. For example, the electronic device 301 may further include the mirror 225 and/or the holographic optical element 226 of FIG. 2.

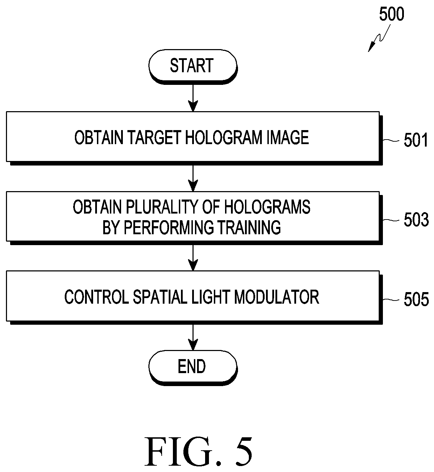

FIG. 5 is a flowchart 500 for describing a method for providing a hologram image according to an embodiment.

Referring to FIG. 5, in operation 501, in an embodiment, the processor 350 may obtain a target hologram image.

In an embodiment, a target hologram image (hereinafter referred to as "target hologram image") (e.g., the target hologram image 261 of FIG. 2) may be a hologram image that is a target of reproduction using the electronic device 301. For example, the target hologram image may be a hologram image that the user desires to reproduce through the electronic device 301.

In an embodiment, the target hologram image may be a hologram image stored in the memory 340 or a server wirelessly connected to the electronic device 301. The processor 350 may obtain the target hologram image from the memory 340 (or the server). For example, the processor 350 may select a target hologram image from among a plurality of target hologram images stored in the memory 340 based on a user input. The processor 350 may obtain the selected target hologram image as a target hologram image to be reproduced through the electronic device 301. For example, the processor 350 may obtain a target hologram image by receiving the target hologram image from a server wirelessly connected to the electronic device 301 through a communication circuit.

In an embodiment, the target hologram image may be a hologram image including a single frame or a hologram video including a plurality of frames.

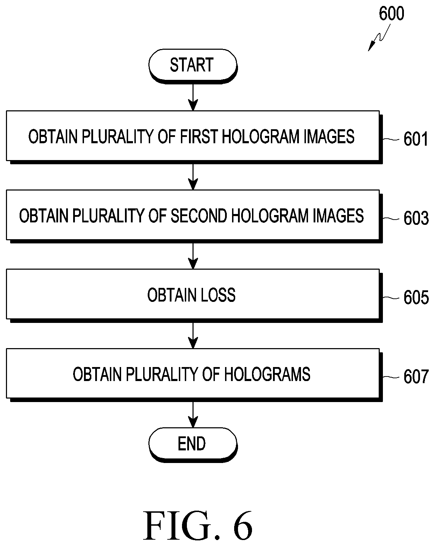

In operation 503, in an embodiment, the processor 350 may obtain a plurality of holograms (e.g., a plurality of final holograms to be described below) by performing training based on the target hologram image and alignment errors that can occur between the spatial light modulator 320 and the mask 330. Hereinafter, the operation of obtaining the plurality of holograms is described in detail with reference to FIGS. 6, 7, 8A, and 8B.

FIG. 6 is a flowchart 600 for describing a method for obtaining a plurality of holograms according to an embodiment.

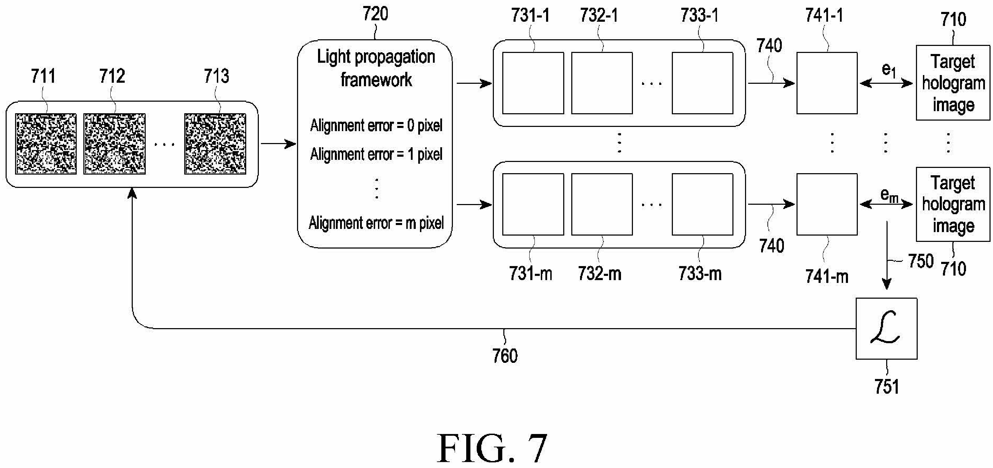

FIG. 7 is a view illustrating a method for obtaining a plurality of holograms according to an embodiment.

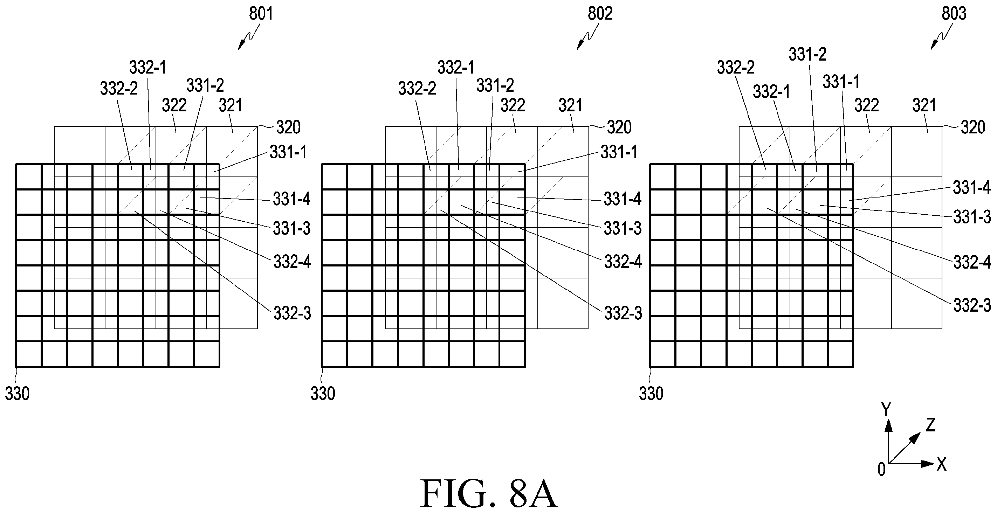

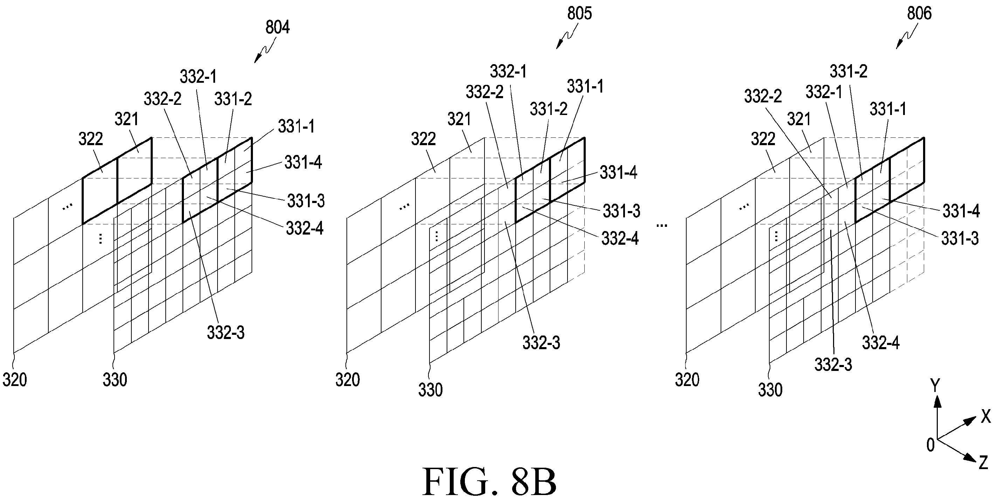

FIGS. 8A and 8B are views illustrating alignment errors that can occur between the spatial light modulator 320 and the mask 330 according to an embodiment.

Referring to FIGS. 6 to 8, in operation 601, in an embodiment, the processor 350 may obtain a plurality of first hologram images predicted to be formed by light modulated by the mask 330 for each of alignment errors that can occur between the spatial light modulator 320 and the mask 330 with respect to a plurality of first holograms, when sequentially providing the plurality of first holograms to the spatial light modulator 320 within a preset time.

In an embodiment, in FIG. 7, the processor 350 may obtain (e.g., generate) a plurality of holograms 711, 712 to 713 (hereinafter referred to as "plurality of first holograms") to be initially input to a light propagation framework 720 based on a target hologram image 710.

In an embodiment, the processor 350 may obtain (e.g., generate) hologram images including pixels having pixel values identical to the pixel values of the pixels of the target hologram image 710 and having phases at least partially different from the phases of the pixels of the target hologram image 710. For example, when the obtained hologram images include hologram image 1 and hologram image 2, the pixel values of hologram image 1 and the pixel values of hologram image 2 may be identical to the pixel values of the target hologram image 710. The phases of the pixels of hologram image 1 and the phases of the pixels of hologram image 2 may be different from the phases of the pixels of the target hologram image 710. The phases of the pixels of hologram image 1 may be different from the phases of the pixels of hologram image 2.

In an embodiment, the processor 350 may obtain the plurality of first holograms by applying the obtained hologram images to an inverse wave function (also referred to as "light inverse propagation function" or "wave inverse propagation function"). For example, the processor 350 may obtain (e.g., calculate) a wave function (also referred to as "light propagation function" or "wave propagation function") for calculating a hologram image from a hologram based on a path along which light emitted from the light source 310 travels and the position of the spatial light modulator 320 in the electronic device 301 (e.g., based on a path along which light emitted from the light source 310 travels and the position of the spatial light modulator 320 in the electronic device 301, assuming that the mask 330 is not included in the electronic device 301). The processor 350 may calculate an inverse wave function for calculating a hologram from a hologram image based on the obtained wave function. The processor 350 may obtain a plurality of first holograms to be initially (e.g., initially) input to the light propagation framework 720 by applying the obtained hologram images (e.g., hologram images including pixels having pixel values identical to the pixel values of the pixels of the target hologram image 710 and having phases at least partially different from the phases of the pixels of the target hologram image 710) to the calculated inverse wave function.

In an embodiment, the number of the plurality of first holograms may be determined based on a refresh rate of the spatial light modulator 320 (e.g., a frequency where the spatial light modulator 320 outputs a hologram pattern). For example, the processor 350 may determine a maximum number of hologram patterns that may be output by the spatial light modulator 320 within a preset time (e.g., about 1/60 second as a maximum time within which the user may not distinguish a plurality of hologram images to be reproduced through the electronic device 301) as the number of the plurality of first holograms. Hereinafter, for convenience of description, it is assumed that the number of the plurality of first holograms is N (N is an integer).

In an embodiment, the processor 350 may obtain a plurality of first hologram images (hereinafter referred to as "plurality of first hologram images") predicted to be formed by light modulated by the spatial light modulator 320 and the mask 330 for each of alignment errors that can occur between the spatial light modulator 320 and the mask 330 with respect to the plurality of first holograms, using the light propagation framework based on the plurality of first holograms.

In an embodiment, the light propagation framework 720 may be a framework capable of performing a simulation operation on a hologram under an assumption that the environment (or condition) of the electronic device 301 is the same as the actual environment of the electronic device 301 (e.g., the state of the electronic device 301 of FIG. 2), except for an error in alignment between the spatial light modulator 320 and the mask 330 (e.g., a difference between an alignment state between the spatial light modulator 320 and the mask 330 that allows a hologram image to be reproduced at a position or on a surface set by the electronic device 301 and an actual alignment state between the spatial light modulator 320 and the mask 330) (hereinafter referred to as "alignment error"). For example, the light propagation framework 720 may include wave functions for calculating a hologram image predicted to be reproduced by light modulated by the spatial light modulator 320 and the mask 330 when a hologram (e.g., a hologram signal or hologram data) is provided to the spatial light modulator 320 for each alignment error that can occur in the above-described environment of the electronic device 301. In an embodiment, the light propagation framework 720 may be implemented in software. However, without being limited thereto, the light propagation framework 720 may be implemented in hardware. In an embodiment, the light propagation framework 720 may be included in the electronic device 301 or a server.

In an embodiment, the alignment errors that can occur between the spatial light modulator 320 and the mask 330 may be assumed to occur by various pixel intervals.

In an embodiment, reference numeral 801 of FIG. 8A and reference numeral 804 of FIG. 8B may indicate a case where there is no alignment error between the spatial light modulator 320 and the mask 330 (e.g., a case where the alignment error between the spatial light modulator 320 and the mask 330 is 0 pixel). For example, as illustrated in reference numeral 801, when there is no alignment error, the position of a pixel 321 of the spatial light modulator 320 may correspond to the positions of pixels 331-1, 331-2, 331-3, and 331-4 of the mask 330, and the position of a pixel 322 of the spatial light modulator 320 may correspond to the positions of pixels 332-1, 332-2, 332-3, and 332-4 of the mask 330.

In an embodiment, reference numeral 802 of FIG. 8A and reference numeral 805 of FIG. 8B may indicate a case where the alignment error between the spatial light modulator 320 and the mask 330 occurs by 1 pixel with respect to the -X axis. For example, as illustrated in reference numeral 802, when the alignment error occurs by 1 pixel with respect to the -X axis, the position of the pixel 321 of the spatial light modulator 320 may not correspond to the positions of the pixels 331-1, 331-2, 331-3, and 331-4 of the mask 330, and the position of the pixel 322 of the spatial light modulator 320 may not correspond to the positions of the pixels 332-1, 332-2, 332-3, and 332-4 of the mask 330.

In an embodiment, reference numeral 803 of FIG. 8A and reference numeral 806 of FIG. 8B may indicate a case where the alignment error between the spatial light modulator 320 and the mask 330 occurs by 2 pixels with respect to the -X axis. For example, as illustrated in reference numeral 803, when the alignment error occurs by 2 pixels with respect to the -X axis, the position of the pixel 321 of the spatial light modulator 320 may not correspond to the positions of the pixels 331-1, 331-2, 331-3, and 331-4 of the mask 330, and the position of the pixel 322 of the spatial light modulator 320 may not correspond to the positions of the pixels 332-1, 332-2, 332-3, and 332-4 of the mask 330.

Although reference numeral 802 and reference numeral 803 of FIG. 8A and reference numeral 805 and reference numeral 806 of FIG. 8B illustrate that the alignment errors between the spatial light modulator 320 and the mask 330 have occurred with respect to the -X axis, without being limited thereto. For example, the alignment errors between the spatial light modulator 320 and the mask 330 may include one or more of an alignment error with respect to the X axis, an alignment error with respect to the Y axis, an alignment error with respect to the Z axis, an alignment error due to relative rotation of the mask 330 with respect to the spatial light modulator 320 about the X axis, an alignment error due to relative rotation of the mask 330 with respect to the spatial light modulator 320 about the Y axis, or an alignment error due to relative rotation of the mask 330 with respect to the spatial light modulator 320 about the Z axis.

In an embodiment, the light propagation framework 720 may output a plurality of first hologram images predicted to be output when a first hologram is provided to the spatial light modulator 320 for each of alignment errors with respect to each of the plurality of first holograms. For example, when a first hologram 711 is input to the light propagation framework 720, the light propagation framework 720 may output a first hologram image 731-1 predicted when the alignment error is 0 pixel (when there is no alignment error) to an mth hologram image 731-m predicted when the alignment error is m pixels (where m is an integer). For example, when a first hologram 712 is input to the light propagation framework 720, the light propagation framework 720 may output a first hologram image 732-1 predicted when the alignment error is 1 pixel to an mth hologram image 732-m predicted when the alignment error is m pixels. For example, when a first hologram 713 is input to the light propagation framework 720, the light propagation framework 720 may output a first hologram image 733-1 predicted when the alignment error is 0 pixel to an mth hologram image 733-m predicted when the alignment error is m pixels.

In an embodiment, the processor 350 may control an operation of sequentially inputting the plurality of first holograms 711, 712 to 713 to the light propagation framework 720. By sequentially inputting the plurality of first holograms 711, 712 to 713 to the light propagation framework 720, a set of first hologram images 731-1 to 731-m, and a set of first hologram images 732-1 to 732-m to a set of first hologram images 733-1 to 733-m may be sequentially output from the light propagation framework 720.

In an embodiment, although FIG. 7 illustrates alignment errors with respect to a single axis (e.g., the X axis of FIGS. 8A and 8B), without being limited thereto. For example, the alignment error may include at least one of an alignment error with respect to the X axis, an alignment error with respect to the Y axis, an alignment error with respect to the Z axis, an alignment error due to relative rotation of the mask 330 with respect to the spatial light modulator 320 about the X axis, an alignment error due to relative rotation of the mask 330 with respect to the spatial light modulator 320 about the Y axis, and an alignment error due to relative rotation of the mask 330 with respect to the spatial light modulator 320 about the Z axis.

In operation 603, in an embodiment, the processor 350 may obtain a plurality of second hologram images (hereinafter referred to as "plurality of second hologram images") by superimposing the plurality of first hologram images for each of alignment errors.

In an embodiment, the processor 350 may perform an operation 740 of superimposing the plurality of first hologram images for each of alignment errors. For example, when the alignment error is 0 pixel, the processor 350 may obtain (e.g., calculate) a second hologram image 741-1 by summing the first hologram image 731-1 to the first hologram image 733-1 output by the light propagation framework 720. For example, when the alignment error is m pixels, the processor 350 may obtain (e.g., calculate) a second hologram image 741-m by summing the first hologram image 731-m to the first hologram image 733-m output by the light propagation framework 720.

In operation 605, in an embodiment, a loss may be obtained based on errors between the plurality of second hologram images and the target hologram.

In an embodiment, the processor 350 may obtain (e.g., calculate) errors between the plurality of second hologram images and the target hologram. For example, in FIG. 7, the processor 350 may calculate an error $e_1$ between the second hologram image 741-1 and the target hologram image 710 to an error $e_m$ between the second hologram image 741-m and the target hologram image 710.

In an embodiment, the processor 350 may obtain a loss based on errors between the plurality of second hologram images and the target hologram image. For example, the processor 350 may obtain a loss 751 by substituting the errors into a preset loss function (hereinafter referred to as "loss function") (750).

In an embodiment, the loss function may include a mean squared error (MSE). However, the loss function is not limited to the MSE. For example, the loss function may be a function summing the errors.

In operation 607, in an embodiment, the processor 350 may obtain a plurality of holograms (e.g., a plurality of final holograms to be described below) based on the loss.

In an embodiment, when the loss is obtained through operation 605, the processor 350 may obtain (e.g., calculate) a gradient of the loss function using a gradient descent method. The processor 350 may obtain (760) a plurality of holograms to be input to the light propagation framework 720 after the plurality of first holograms based on the obtained gradient.

In an embodiment, the processor 350 may obtain a plurality of holograms (hereinafter referred to as "plurality of final holograms") that minimize the loss (e.g., the output value of the loss function) by repeatedly performing the above-described operations 601 to the operation of obtaining the plurality of holograms to be input after the plurality of first holograms. For example, the processor 350 may repeatedly perform the above-described operations 601 to the operation of obtaining the plurality of holograms to be input after the plurality of first holograms. The processor 350 may determine the plurality of holograms that were input to the light propagation framework 720 as the plurality of final holograms when the loss becomes minimum (e.g., when the loss does not decrease while repeatedly performing the above-described operations 601 to the operation of obtaining the plurality of holograms to be input after the plurality of first holograms) while repeatedly performing the above-described operations 601 to the operation of obtaining the plurality of holograms to be input after the plurality of first holograms.

Hereinafter, the operation of obtaining the plurality of final holograms using the loss function is described in more detail.

In an embodiment, the processor 350 may obtain (e.g., calculate) a loss function. The operation of obtaining the loss function may be performed before performing operation 501 of FIG. 5.

In an embodiment, the processor 350 may set a plurality of holograms to be input to the light propagation framework 720 as $x_i$ (1, 2, ..., n-1, n $\in$ i, where n represents the number of the plurality of holograms to be input to the light propagation framework 720). The processor 350 may set the output of the light propagation framework 720 as a function $f_j$ $(x_i)$ (1, 2, ..., m-1, m $\in$ j) (where m represents an alignment error). The function $f_j(x_i)$ may represent wave functions for calculating a hologram image predicted to be reproduced by light modulated by the spatial light modulator 320 and the mask 330 when a hologram is provided to the spatial light modulator 320 for each alignment error. The processor 350 may calculate a superposition function $\sum_{i=0}^{n} f_j(x_i)$ for each alignment error by superimposing (e.g., summing) the outputs $f_j$ $(x_i)$ of the light propagation framework 720 for each alignment error. The processor 350 may calculate an error between the superposition function for each alignment error and the target hologram image, and calculate a loss function based on the calculated error.

[Equation 1]

$$\text{errors for each alignment error} = \left( \sum_{i=1}^{n} f_j(x_i) - T \right)^2$$

[Equation 2]

$$\text{loss function} = (1/m) \left[ \sum_{j=1}^{m} \left( \sum_{i=1}^{n} f_j(x_i) - T \right)^2 \right]$$

In an embodiment, in [Equation 1] and [Equation 2], T may represent the target hologram image.

In an embodiment, after obtaining the loss function (e.g., the loss function of [Equation 2]), the processor 350 may obtain a plurality of first holograms (e.g., $x_i$ initially input) as holograms to be initially input to the light propagation framework 720 by performing the above-described operations when the target hologram image is identified (e.g., when the target hologram image is identified in operation 501). The processor 350 may calculate a first loss by applying (e.g., substituting) the plurality of first holograms and the target hologram image to the loss function. The processor 350 may calculate holograms to be input to the light propagation framework 720 after the plurality of first holograms using a gradient descent method based on the first loss and the loss function. The processor 350 may update the holograms input to the light propagation framework 720 by repeating the above-described operations. The processor 350 may continuously obtain losses using the updated holograms. The processor 350 may determine the holograms last input to the light propagation framework 720 as the plurality of final holograms based on identifying that the obtained losses are no longer decreasing.

Referring back to FIG. 5, in operation 505, in an embodiment, the processor 350 may control the spatial light modulator 320 to output a pattern based on the plurality of holograms (the plurality of final holograms).

In an embodiment, the processor 350 may control the spatial light modulator 320 such that the spatial light modulator 320 sequentially outputs a plurality of hologram patterns respectively corresponding to the plurality of holograms within a preset time. For example, the processor 350 may provide the plurality of holograms and a control signal to a driving circuit (also referred to as "driver") of the spatial light modulator 320. The driving circuit of the spatial light modulator 320 may control a panel of the spatial light modulator 320 such that the panel of the spatial light modulator 320 sequentially outputs a plurality of hologram patterns corresponding to the plurality of holograms within a preset time based on the control signal. For example, the processor 350 may provide the plurality of holograms to the driving circuit of the spatial light modulator 320. The driving circuit of the spatial light modulator 320 may control the panel of the spatial light modulator 320 such that a plurality of hologram patterns corresponding to the plurality of holograms are sequentially output within a preset time based on a preset setting.

Although not described through FIGS. 5, 6, 7, 8A, and 8B, in an embodiment, the processor 350 may set the maximum value of alignment error between the spatial light modulator 320 and the mask 330 set in the light propagation framework 720 (e.g., m pixels as the alignment error between the spatial light modulator 320 and the mask 330 of FIG. 7). For example, the processor 350 may set, based on a user input, the maximum value of alignment error between the spatial light modulator 320 and the mask 330 set in the light propagation framework 720.

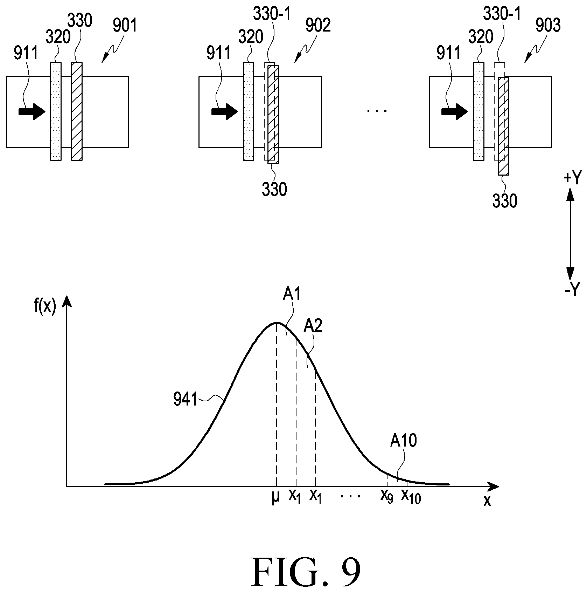

FIG. 9 is a view illustrating a method for obtaining a loss function according to an embodiment.

Referring to FIG. 9, in an embodiment, when obtaining the loss function, the processor 350 may set different weights for errors for each alignment error between the spatial light modulator 320 and the mask 330.

In an embodiment, as described above, an alignment error can occur between the spatial light modulator 320 and the mask 330. For example, reference numeral 901 may indicate a case where the alignment error between the spatial light modulator 320 and the mask 330 is 0. Reference numeral 902 may indicate a case where the alignment error between the spatial light modulator 320 and the mask 330 is 1 pixel with respect to the Y axis. Reference numeral 903 may indicate a case where the alignment error between the spatial light modulator 320 and the mask 330 is 10 pixels with respect to the Y axis. In reference numerals 901 to 903, an arrow 911 indicates a traveling direction of light, and in reference numerals 902 and 903, a dashed line 330-1 may indicate a state aligned with the spatial light modulator 320 (e.g., a state in which the alignment error between the spatial light modulator 320 and the mask 330 is 0).

In an embodiment, the smaller the alignment error between the spatial light modulator 320 and the mask 330, the higher the probability that the alignment error occurs. For example, when manufacturing the electronic device 301, the spatial light modulator 320 and the mask 330 may be disposed in the electronic device 301 such that the alignment error between the spatial light modulator 320 and the mask 330 is minimized (e.g., the alignment error is substantially 0 pixel). Accordingly, the smaller the alignment error between the spatial light modulator 320 and the mask 330, the higher the probability that the alignment error occurs.

In an embodiment, the processor 350 may set (e.g., assign) a higher weight to an error (e.g., the error of [Equation 1]) for each alignment error between the spatial light modulator 320 and the mask 330 as the alignment error between the spatial light modulator 320 and the mask 330 is smaller.

In an embodiment, the processor 350 may set different weights for errors for each alignment error between the spatial light modulator 320 and the mask 330 based on a probability distribution function (e.g., a normal distribution function). For example, reference numeral 904 may indicate a graph 941 of a normal distribution function (e.g., a probability density function f(x) with a mean of $\mu$ and a standard deviation of $\sigma$). In reference numeral 904, x1 may indicate an alignment error of 0 pixel, x2 may indicate an alignment error of 1 pixel, x9 may indicate an alignment error of 9 pixels, and x10 may indicate an alignment error of 1 pixel. The processor 350 may set a value obtained by multiplying the area A1, which is a value obtained by integrating f(x) between $\mu$ and x1, by 2 as a weight for an error corresponding to an alignment error of 0 pixel. The processor 350 may set a value (probability) obtained by multiplying the area A2, which is a value obtained by integrating f(x) between x1 and x2, by 2 as a weight for an error corresponding to an alignment error of 1 pixel. The processor 350 may set a value obtained by multiplying the area A10, which is a value obtained by integrating f(x) between x9 and x10, by 2 as a weight for an error corresponding to an alignment error of 10 pixels.

In an embodiment, the processor 350 may obtain (e.g., calculate) a loss function such as [Equation 3] below based on the set weights.

[Equation 3]

$$\text{loss function} = (1/m)\left[\sum_{j=1}^{m} a_j\left(\sum_{i=1}^{n} f_j(x_i) - T\right)^2\right]$$

In an embodiment, in [Equation 3], T may represent the target hologram image, and $a_j$ may represent weights for errors for each alignment error between the spatial light modulator 320 and the mask 330. In an embodiment, the sum of the weights may be substantially 1. However, the disclosure is not limited thereto. For example, the processor 350 may set all of the weights to the same value.

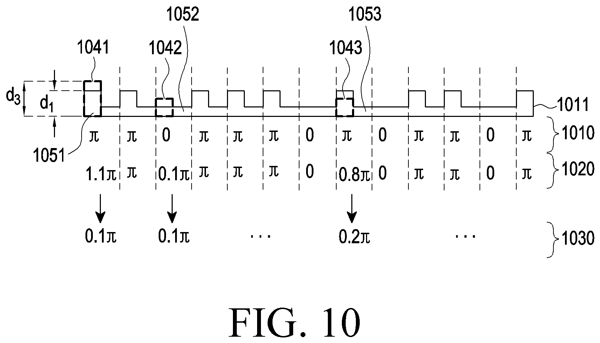

FIG. 10 is a view illustrating a method for setting the light propagation framework 720 based on a phase error of the mask 330 according to an embodiment.

Referring to FIG. 10, in an embodiment, phases corresponding to pixels included in the mask 330 (e.g., phases of light changed by the pixels included in the mask 330) may be different from phases set (e.g., intended by a designer) when the mask 330 is designed. For example, errors in thicknesses of some pixels of the mask 330 can occur during manufacturing of the mask 330. In FIG. 10, reference numeral 1011 may indicate a mask 1011 intended when is designed. As illustrated in FIG. 10, although the thickness of a pixel 1051 of the mask 1011 was intended to be d1 during design, the thickness of the manufactured pixel 1051 may be d3 as indicated by a dashed line 1041. Further, in a pixel 1052 and a pixel 1053, the thicknesses during design and the thicknesses of the actually manufactured pixel 1052 and pixel 1053 indicated by dashed lines 1042 and 1043 may be different. In FIG. 10, reference numeral 1010 may indicate first phases corresponding to pixels included in the mask 1011 intended during design of the mask, reference numeral 1020 may indicate second phases corresponding to pixels included in the actually manufactured mask 1011, and reference numeral 1030 may indicate a difference between the first phases and the second phases.

In an embodiment, the processor 350 may set (or adjust) the light propagation framework 720 considering errors between phases corresponding to pixels included in the mask 330 during design and during manufacturing (hereinafter referred to as "phase errors of the mask"). For example, as described above, when the input to the light propagation framework 720 is $x_i$, the output of the light propagation framework 720 may be set as a function $f_j(x_i)$. For example, the processor 350 may set a function representing the output of the light propagation framework 720 when the input to the light propagation framework 720 is $x_i$ as [Equation 4] below based on phase errors that can occur in the mask 330.

[Equation 4]

$$\text{output of light propagation framework} = f_j(x_j, b_k)$$

In [Equation 4], $b_k$ may represent phase errors that can occur for each of the pixels of the mask 330. For example, when the mask 330 includes a first pixel and a second pixel, $b_k$ may represent each of combinations of errors that can occur in the first pixel and errors that can occur in the second pixel.

In an embodiment, the processor 350 may obtain (e.g., calculate) the loss function by performing the above-described operations when the light propagation framework 720 as in [Equation 4] is set.

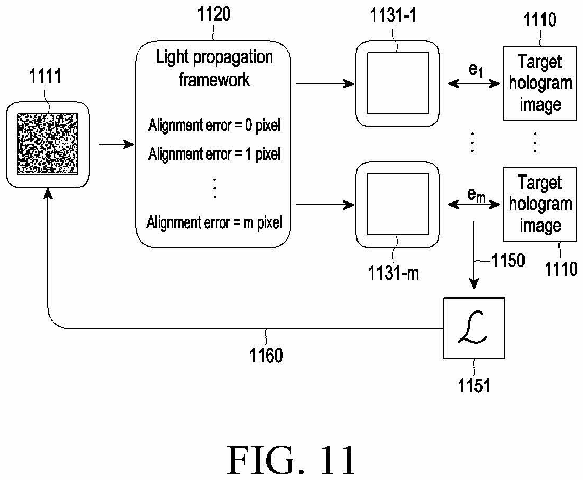

FIG. 11 is a view illustrating a method for obtaining a single hologram according to an embodiment.

Referring to FIG. 11, in an embodiment, although the above-described examples describe an operation of obtaining a plurality of holograms (a plurality of final holograms), without being limited thereto. For example, the processor 350 may obtain a single final hologram.

In an embodiment, the processor 350 may obtain (e.g., generate) a hologram 1111 to be initially input to a light propagation framework 1120 based on a target hologram image 1110 (e.g., the target hologram image 261). For example, the processor 350 may obtain (e.g., generate) a hologram image including pixels having pixel values identical to the pixel values of the pixels of the target hologram image 1110 and having phases at least partially different from the phases of the pixels of the target hologram image 1110. The processor 350 may obtain the hologram 1111 by applying the hologram image to an inverse wave function.

In an embodiment, the processor 350 may output a first hologram image predicted to be output when the hologram 1111 is provided to the spatial light modulator 320 for each of alignment errors with respect to the hologram 1111 by the light propagation framework. For example, the light propagation framework may output a hologram image 1131 predicted when the alignment error is 0 pixel (when there is no alignment error) to a hologram image 1131-m predicted when the alignment error is m pixels (where m is an integer).

In an embodiment, the processor 350 may obtain (e.g., calculate) errors $e_1$ to $e_m$ between the hologram image 1131 to the hologram image 1131-m and the target hologram image 1110.

In an embodiment, the processor 350 may obtain a loss based on errors $e_1$ to $e_m$ between the hologram image 1131 to the hologram image 1131-m and the target hologram image 1110. For example, the processor 350 may obtain a loss 1151 by applying (1150) (e.g., substituting) the errors $e_1$ to $e_m$ to the loss function.

In an embodiment, the processor 350 may obtain (e.g., calculate) a gradient of the loss function using a gradient descent method when the loss 1151 is obtained. The processor 350 may obtain (1160) a hologram to be input to the light propagation framework after the hologram 1111 based on the obtained gradient and the loss function.

In an embodiment, the processor 350 may obtain a hologram (hereinafter referred to as "final hologram") that minimizes the loss by repeatedly performing the above-described operations.

In an embodiment, the processor 350 may control the spatial light modulator 320 such that the spatial light modulator 320 outputs a hologram pattern corresponding to the final hologram.

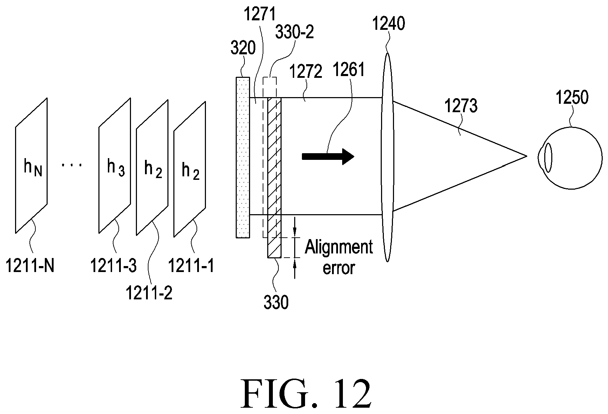

FIG. 12 is a view illustrating a method for providing a hologram image according to an embodiment.

Referring to FIG. 12, in an embodiment, in FIG. 12, reference numerals 1211-1, 1211-2, and 1211-3 to 1211-N may indicate a plurality of final holograms $h_1$, $h_2$, $h_3$ to $h_N$ to be provided to the spatial light modulator 320. The plurality of final holograms $h_1$, $h_2$, $h_3$ to $h_N$ may be obtained by performing the operations described through FIGS. 2 to 11.

In an embodiment, the processor 350 may sequentially provide the plurality of final holograms $h_1$, $h_2$, $h_3$ to $h_N$ to the spatial light modulator 320 within a preset time.

In an embodiment, the processor 350 may control the spatial light modulator 320 such that a plurality of hologram patterns respectively corresponding to the plurality of final holograms $h_1$, $h_2$, $h_3$ to $h_N$ are sequentially output within a preset time. For example, the processor 350 may provide the plurality of holograms and a control signal to the driving circuit of the spatial light modulator 320. The driving circuit of the spatial light modulator 320 may control a panel of the spatial light modulator 320 such that the panel of the spatial light modulator 320 sequentially outputs a plurality of hologram patterns corresponding to the plurality of holograms within a preset time based on the control signal. For example, the processor 350 may provide the plurality of holograms to the driving circuit of the spatial light modulator 320. The driving circuit of the spatial light modulator 320 may control the panel of the spatial light modulator 320 such that a plurality of hologram patterns corresponding to the plurality of holograms are sequentially output within a preset time based on a preset setting.

In an embodiment, N as the number of the plurality of final holograms $h_1$, $h_2$, $h_3$ to $h_N$ may be determined based on the refresh rate of the spatial light modulator 320 (e.g., a frequency where the spatial light modulator 320 outputs a hologram pattern). For example, the processor 350 may determine a maximum number of hologram patterns that may be output by the spatial light modulator 320 within a preset time (e.g., about 1/60 second as a maximum time within which the user may not distinguish a plurality of hologram images to be reproduced through the electronic device 301) as N.

In an embodiment, when the target hologram image is a single image (e.g., a single frame), the plurality of final holograms $h_1$, $h_2$, $h_3$ to $h_N$ may be holograms obtained based on a single target hologram image. When the target hologram image is a plurality of images (e.g., a video including a plurality of frames), a plurality of final holograms may be obtained for each of the plurality of images.

In an embodiment, light 1271 may represent light modulated by a plurality of hologram patterns respectively corresponding to the plurality of final holograms $h_1$, $h_2$, $h_3$ to $h_N$. In an embodiment, light 1272 may represent light obtained by further modulating the light modulated by the plurality of hologram patterns by the mask 330. In an embodiment, reference numeral 1261 may indicate a traveling direction of the light 1272, and a dashed line 330-2 may indicate the mask 330 when the alignment error between the spatial light modulator 320 and the mask 330 is 0 pixel.

In an embodiment, light 1273 may represent light converging to an eyeball 1250 of the user when the light 1272 passes through an optical element 1240 (e.g., an eyepiece lens). The plurality of hologram images corresponding to the plurality of final holograms $h_1$, $h_2$, $h_3$ to $h_N$ may be sequentially reproduced as virtual images within a preset time by the optical element 1240.

In an embodiment, by sequentially reproducing a plurality of hologram images corresponding to the plurality of final holograms $h_1$, $h_2$, $h_3$ to $h_N$ within a preset time using the plurality of final holograms $h_1$, $h_2$, $h_3$ to $h_N$ obtained based on alignment errors that can occur between the spatial light modulator 320 and the mask 330, the plurality of hologram images having quality equal to or higher than preset quality may be reproduced with respect to actual alignment errors between the spatial light modulator 320 and the mask 330.

In an embodiment, although FIGS. 2 to 12 illustrate that the electronic device 301 is an HMD device capable of reproducing a hologram image, without being limited thereto. For example, the electronic device 301 may be a device (e.g., a server, a PC, or a notebook) capable of generating a plurality of holograms (e.g., a plurality of final holograms) by performing the above-described operations without including components for reproducing a hologram image such as the spatial light modulator 320, the mask 330, and an optical element, and providing the plurality of holograms to an HMD capable of reproducing a hologram image.

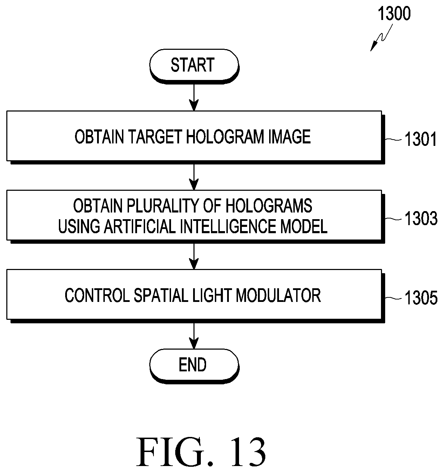

FIG. 13 is a flowchart 1300 for describing a method for providing a hologram image according to an embodiment.

Referring to FIG. 13, in operation 1301, in an embodiment, the processor 350 may obtain a target hologram image (e.g., the target hologram image 261).

Operation 1301 is at least partially identical or similar to operation 501 of FIG. 5, so detailed description is omitted.

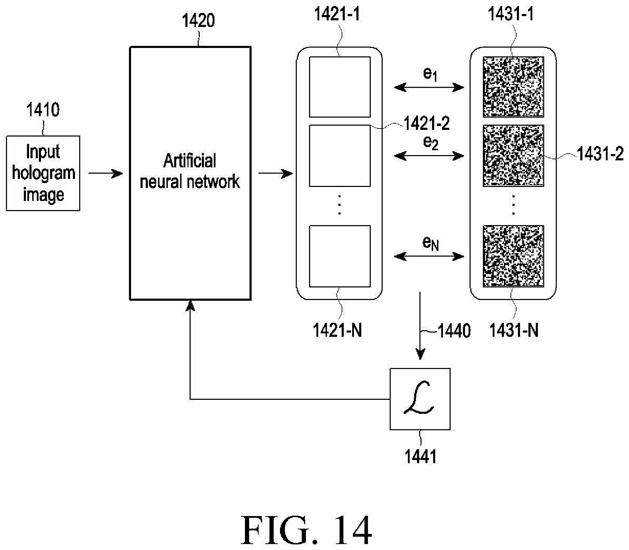

In operation 1303, in an embodiment, the processor 350 may obtain a plurality of holograms (hereinafter referred to as "plurality of final holograms") using an artificial intelligence model based on the target hologram image. Hereinafter, an operation of training the artificial intelligence model is described in detail with reference to FIG. 14.

FIG. 14 is a view illustrating a method for obtaining an artificial intelligence model according to an embodiment.

Referring to FIG. 14, in an embodiment, an input hologram image 1410 may be input data input to an artificial neural network 1420.

In an embodiment, a ground truth used for training may be a plurality of holograms 1431-1, 1431-2 to 1431-N corresponding to the hologram image 1410.

In an embodiment, the plurality of holograms 1431-1, 1431-2 to 1431-N corresponding to the input hologram image 1410 may be a plurality of final holograms obtained through training in which the input hologram image 1410 is used as a target hologram image (e.g., the target hologram image 710, the target hologram image 1110) in the operations described through FIGS. 2 to 13. For example, the plurality of holograms 1431-1, 1431-2 to 1431-N may be a plurality of final holograms obtained by performing operation 503 of FIG. 5 using the input hologram image 1410 (e.g., obtained by performing training based on the hologram image 1410 and alignment errors that can occur between the spatial light modulator 320 and the mask 330).

In an embodiment, the artificial neural network 1420 may output a plurality of first hologram images 1421-1, 1421-2 to 1421-N under the control of the processor 350 when the input hologram image 1410 is input.

In an embodiment, the processor 350 may obtain errors $e_1$, $e_2$ to $e_N$ between the plurality of first hologram images 1421-1, 1421-2 to 1421-N and the plurality of holograms 1431-1, 1431-2 to 1431-N as the ground truth.

In an embodiment, the processor 350 may obtain (1440) a loss function 1441 based on the errors $e_1$, $e_2$ to $e_N$. In an embodiment, the loss function may include a mean squared error (MSE). However, the loss function is not limited to the MSE. For example, the loss function may be a function summing the errors $e_1$, $e_2$ to $e_N$.

In an embodiment, the processor 350 may train (e.g., update) an artificial intelligence model (e.g., weights of the artificial neural network 1420) using a gradient descent method with respect to the loss function. For example, the processor 350 may calculate a gradient of the loss function. The processor 350 may update the weights of the artificial neural network based on the obtained gradient.

In an embodiment, the processor 350 may obtain an artificial intelligence model (e.g., the weights of the artificial neural network) by repeatedly performing the above-described operations.

Although the above-described examples describe that the operation of training the artificial intelligence model is performed by the processor 350, without being limited thereto. At least a portion of the above-described operation of training the artificial intelligence model may be performed by a server wirelessly connectable to the electronic device 301.

Referring back to FIG. 13, in an embodiment, the processor 350 may obtain a plurality of final holograms by inputting the target hologram image to an artificial neural network (e.g., the artificial neural network 1420) using the trained artificial intelligence model (e.g., the trained weights).

In operation 1305, in an embodiment, the processor 350 may control the spatial light modulator 320 to output a pattern based on the plurality of holograms.

Since operation 1305 is at least partially identical or similar to operation 505 of FIG. 5, a detailed description thereof is omitted.

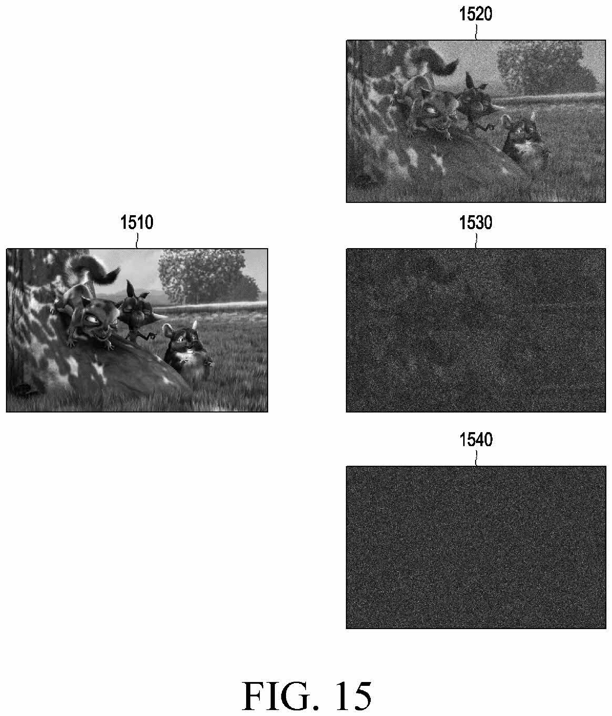

FIG. 15 is a view illustrating hologram images reproduced based on an operation of a comparative example according to an embodiment.

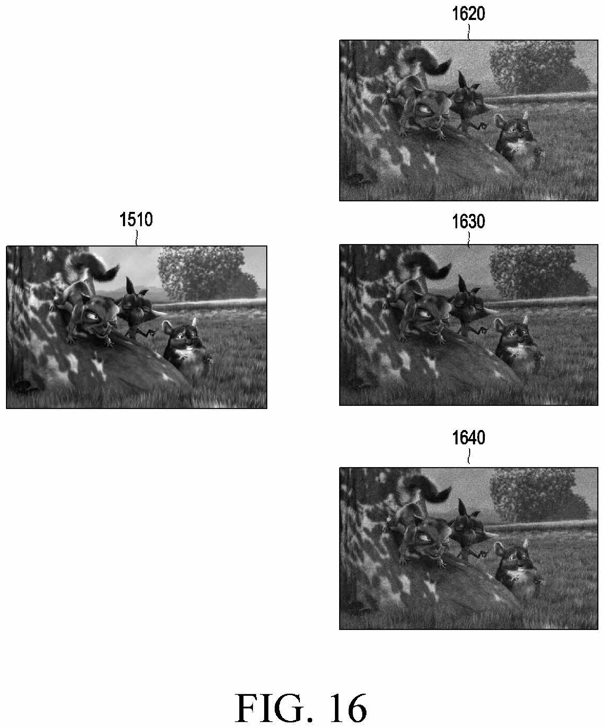

FIG. 16 is a view illustrating hologram images reproduced based on an operation of providing a hologram according to an embodiment.

Referring to FIGS. 15 and 16, in an embodiment, the operation of the comparative example may be an operation of obtaining a hologram corresponding to a target hologram image under the assumption that the alignment error between the spatial light modulator 320 and the mask 330 is 0 pixel. For example, the operation of the comparative example may include an operation in which the light propagation framework (e.g., the light propagation framework 720) outputs a hologram image only for a case where the alignment error is 0 pixel (considering only the case where the alignment error is 0 pixel) when a hologram is input in FIG. 11, and an operation of obtaining a hologram that minimizes a loss obtained based on a single error between the output hologram image and the target hologram image.

In an embodiment, in FIG. 15, a hologram image 1520 may be a hologram image reproduced by providing a hologram obtained by performing the operation of the comparative example using a target hologram image 1510 to the spatial light modulator 320 when the actual alignment error between the spatial light modulator 320 and the mask 330 is 0 pixel. A hologram image 1530 may be a hologram image reproduced by providing a hologram obtained by performing the operation of the comparative example using the target hologram image 1510 to the spatial light modulator 320 when the actual alignment error between the spatial light modulator 320 and the mask 330 is 5 pixels. A hologram image 1540 may be a hologram image reproduced by providing a hologram obtained by performing the operation of the comparative example using the target hologram image 1510 to the spatial light modulator 320 when the actual alignment error between the spatial light modulator 320 and the mask 330 is 10 pixels.

In an embodiment, in FIG. 16, a hologram image 1620 may be a hologram image reproduced by providing a plurality of final holograms obtained by performing the above-described operations 501 to 505 using the target hologram image 1510 to the spatial light modulator 320 when the actual alignment error between the spatial light modulator 320 and the mask 330 is 0 pixel. A hologram image 1630 may be a hologram image reproduced by providing a plurality of final holograms obtained by performing the above-described operations 501 to 505 using the target hologram image 1510 to the spatial light modulator 320 when the actual alignment error between the spatial light modulator 320 and the mask 330 is 5 pixels. A hologram image 1640 may be a hologram image reproduced by providing a plurality of final holograms obtained by performing the above-described operations 501 to 505 using the target hologram image 1510 to the spatial light modulator 320 when the actual alignment error between the spatial light modulator 320 and the mask 330 is 10 pixels.

In an embodiment, comparing the hologram image 1520 and the hologram image 1620 of FIGS. 15 and 16, when the actual alignment error between the spatial light modulator 320 and the mask 330 is 0 pixel, there may be substantially no difference between the image quality of the hologram image 1520 and the image quality of the hologram image 1620. Comparing the hologram image 1520 and the hologram image 1530 with the hologram image 1620 and the hologram image 1630, respectively, the difference between the image quality of the hologram image reproduced based on the operation of the comparative example and the image quality of the hologram image reproduced by providing a plurality of final holograms obtained by performing the above-described operations 501 to 505 using the target hologram image 1510 to the spatial light modulator 320 may increase as the actual alignment error between the spatial light modulator 320 and the mask 330 increases.

EP 4 787 082 A1

An embodiment of the disclosure and terms used herein are not intended to limit the technical features described in the disclosure to specific embodiments, but should be understood to include various modifications, equivalents, or alternatives of the corresponding embodiment. In connection to the description of the drawings, similar reference numerals may be used for similar or related components. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used herein, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

An embodiment of the disclosure may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a compiler or a code executable by an interpreter. The storage medium readable by the machine may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to an embodiment of the disclosure may be included and provided in a computer program product. The computer program products may be traded as commodities between sellers and buyers. The computer program product may be distributed in the form of a machine-readable storage medium (e.g., compact disc read only memory (CD-ROM)), or be distributed (e.g., downloaded or uploaded) online via an application store (e.g., Play Store™), or between two user devices (e.g., smartphones) directly. If distributed online, at least part of the computer program product may be temporarily generated or at least temporarily stored in the machine-readable storage medium, such as memory of the manufacturer's server, a server of the application store, or a relay server.

According to an embodiment, each component (e.g., a module or a program) of the above-described components may include a single entity or multiple entities. Some of the plurality of entities may be separately disposed in different components. According to an embodiment, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

An electronic device 301 according to an embodiment may include a light source 310, a spatial light modulator 320 configured to modulate light emitted from the light source 310, a mask 330 configured to modulate light modulated by the spatial light modulator 320, memory 340, and at least one processor 350. The at least one processor 350 may obtain a plurality of holograms by performing training based on a target hologram image and alignment errors that can occur between the spatial light modulator 320 and the mask 330. The at least one processor 350 may control the spatial light modulator 320 to output a pattern based on the obtained plurality of holograms such that the light emitted from the light source is modulated. The light modulated by the spatial light modulator 320 may be modulated by the mask 330 such that a plurality of hologram images corresponding to the plurality of holograms are sequentially formed within a preset time.

In an embodiment, the at least one processor 350 may obtain, for each of the alignment errors with respect to a plurality of first holograms, a plurality of first hologram images predicted to be formed by light modulated by the mask 330 when sequentially providing the plurality of first holograms to the spatial light modulator 320 within the preset time. The at least one processor 350 may obtain a plurality of second hologram images by superimposing the plurality of first hologram images for each of the alignment errors. The at least one processor 350 may obtain a loss based on errors between the plurality of second hologram images and the target hologram image. The at least one processor 350 may obtain the plurality of holograms based on the loss.

In an embodiment, the at least one processor 350 may obtain hologram images including pixels having pixel values identical to the pixel values of the pixels of the target hologram image and having phases at least partially different from the phases of the pixels of the target hologram image. The at least one processor 350 may obtain the plurality of first holograms by applying the obtained hologram images to an inverse wave function.

In an embodiment, the electronic device 301 may include a light propagation framework configured to output hologram images predicted to be formed by light modulated by the mask 330 for each of the alignment errors with respect to holograms, when sequentially providing the holograms to the spatial light modulator 320 within the preset time. The at least one processor 350 may obtain superimposed hologram images by superimposing the hologram images for each of the alignment errors. The at least one processor 350 may obtain a loss function based on errors between the superimposed hologram images and the target hologram image. The at least one processor 350 may obtain the plurality of holograms that minimize the loss function using a gradient descent method.

In an embodiment, the at least one processor 350 may set, based on a probability distribution function, weights to the errors between the superimposed hologram images and the target hologram image such that a weight for an error is higher as an alignment error corresponding to the error is smaller.

In an embodiment, the light propagation framework may be configured to output hologram images predicted to be formed by light modulated by the mask 330, based on phase errors between phases modulated by pixels included in the mask 330 and phases set when the mask 330 is designed, for each of the alignment errors with respect to the holograms.

In an embodiment, the at least one processor 350 may receive the target hologram image from a server wirelessly connected to the electronic device 301 through a communication circuit or obtain the target hologram image from the memory 340.

In an embodiment, the at least one processor 350 may set, based on a user input, the target hologram image and a number of alignment errors that can occur between the spatial light modulator 320 and the mask 330.

In an embodiment, the at least one processor 350 may be configured to determine the number of the plurality of holograms based on a refresh rate of the spatial light modulator 320.

A method according to an embodiment is a method for providing a hologram image in an electronic device 301, the method including: obtaining a plurality of holograms by performing training based on a target hologram image and alignment errors that can occur between a spatial light modulator 320 of the electronic device 301 and a mask 330 of the electronic device 301; and controlling the spatial light modulator 320 to output a pattern based on the obtained plurality of holograms such that the light emitted from the light source is modulated. The light modulated by the spatial light modulator 320 may be modulated by the mask 330 such that a plurality of hologram images corresponding to the plurality of holograms are sequentially formed within a preset time.

In an embodiment, obtaining the plurality of holograms may include obtaining, for each of the alignment errors with respect to a plurality of first holograms, a plurality of first hologram images predicted to be formed by light modulated by the mask 330 when sequentially providing the plurality of first holograms to the spatial light modulator 320 within the preset time. The obtaining of the plurality of holograms may include obtaining a plurality of second hologram images by superimposing the plurality of first hologram images for each of the alignment errors. The obtaining of the plurality of holograms may include obtaining a loss based on errors between the plurality of second hologram images and the target hologram image. The obtaining of the plurality of holograms may include obtaining the plurality of holograms based on the loss.

In an embodiment, obtaining the plurality of first hologram images may include obtaining hologram images including pixels having pixel values identical to the pixel values of the pixels of the target hologram image and having phases at least partially different from the phases of the pixels of the target hologram image. The obtaining of the plurality of holograms may include obtaining the plurality of first holograms by applying the obtained hologram images to an inverse wave function.

In an embodiment, the electronic device 301 may include a light propagation framework configured to output hologram images predicted to be formed by light modulated by the mask 330 for each of the alignment errors with respect to holograms, when sequentially providing the holograms to the spatial light modulator 320 within the preset time. The method may further include obtaining superimposed hologram images by superimposing the hologram images for each of the alignment errors. The method may further include obtaining a loss function based on errors between the superimposed hologram images and the target hologram image. The method may further include obtaining the plurality of holograms that minimize the loss function using a gradient descent method.

In an embodiment, obtaining the loss function may include setting, based on a probability distribution function, weights to the errors between the superimposed hologram images and the target hologram image such that a weight for an error is higher as an alignment error corresponding to the error is smaller.

In an embodiment, the light propagation framework may be configured to output hologram images predicted to be formed by light modulated by the mask 330, based on phase errors between phases modulated by pixels included in the mask 330 and phases set when the mask 330 is designed, for each of the alignment errors with respect to the holograms.

In an embodiment, the method may further include receiving the target hologram image from a server wirelessly connected to the electronic device 301 through a communication circuit or obtaining the target hologram image from the memory 340.

In an embodiment, the method may further include setting, based on a user input, the target hologram image and a number of alignment errors that can occur between the spatial light modulator 320 and the mask 330.

In an embodiment, the method may further include determining the number of the plurality of holograms based on a refresh rate of the spatial light modulator 320.

An electronic device 301 according to an embodiment may include a light source 310 emitting light, a spatial light modulator 320 configured to modulate light emitted from the light source 310, a mask 330 configured to modulate light modulated by the spatial light modulator 320, memory 340, and at least one processor 350. The at least one processor 350 may obtain a plurality of holograms using an artificial intelligence model based on a target hologram image. The at least one processor 350 may control the spatial light modulator 320 to output a pattern based on the obtained plurality of holograms such that the light emitted from the light source 310 is modulated. The light modulated by the spatial light modulator 320 may be modulated by the mask 330 such that a plurality of hologram images corresponding to the plurality of holograms are sequentially formed within a preset time. The artificial intelligence model may be trained using an input hologram image as input data and using a plurality of first holograms obtained by performing training based on the input hologram image and alignment errors that can occur between the spatial light modulator 320 and the mask 330 as a ground truth.

In an embodiment, the performing of training based on the input hologram image and alignment errors that can occur between the spatial light modulator 320 and the mask 330 may include inputting the input hologram image to an artificial neural network using the artificial intelligence model, obtaining errors based on a plurality of second holograms output from the artificial neural network and the plurality of first holograms, and obtaining weights of the artificial neural network that minimize a loss function obtained based on the errors using a gradient descent method.

In an embodiment, in a non-transitory computer-readable medium storing computer-executable instructions, the computer-executable instructions may, when executed by at least one processor 350, cause an electronic device 301 to obtain a plurality of holograms by performing training based on a target hologram image and alignment errors that can occur between a spatial light modulator 320 of the electronic device 301 and a mask 330 of the electronic device 301. The computer-executable instructions may, when executed by the at least one processor 350, control the spatial light modulator 320 to output a pattern based on the obtained plurality of holograms such that the light emitted from the light source 310 is modulated. The light modulated by the spatial light modulator 320 may be modulated by the mask 330 such that a plurality of hologram images corresponding to the plurality of holograms are sequentially formed within a preset time.

Further, the structure of the data used in embodiments of the disclosure may be recorded in a computer-readable recording medium via various means. The computer-readable recording medium includes a storage medium, such as a magnetic storage medium (e.g., a ROM, a floppy disc, or a hard disc) or an optical reading medium (e.g., a CD-ROM or a DVD).

**Claims**

1.  An electronic device (301), comprising:

    a light source (310) emitting light;
    a spatial light modulator (320) configured to modulate light emitted from the light source;
    a mask (330) configured to modulate light modulated by the spatial light modulator (320);
    memory (340); and
    at least one processor (350), wherein the at least one processor is configured to:

        obtain a plurality of holograms by performing training based on a target hologram image and alignment errors that can occur between the spatial light modulator and the mask; and
        control the spatial light modulator to output a pattern based on the obtained plurality of holograms such that the light emitted from the light source is modulated, and wherein the light modulated by the spatial light modulator is modulated by the mask such that a plurality of hologram images corresponding to the plurality of holograms are sequentially formed within a preset time.

2.  The electronic device of claim 1, wherein the at least one processor is configured to:

    obtain, for each of the alignment errors with respect to a plurality of first holograms, a plurality of first hologram images predicted to be formed by the light modulated by the mask when sequentially providing the plurality of first holograms to the spatial light modulator within the preset time;

obtain a plurality of second hologram images by superimposing the plurality of first hologram images for each of the alignment errors;

obtain a loss based on errors between the plurality of second hologram images and the target hologram image; and

obtain the plurality of holograms based on the loss.

3. The electronic device of claim 2, wherein the at least one processor is configured to:

obtain hologram images including pixels having pixel values identical to the pixel values of the pixels of the target hologram image and having phases at least partially different from the phases of the pixels of the target hologram image, and

obtain the plurality of first holograms by applying the obtained hologram images to an inverse wave function.

4. The electronic device of any one of claims 1 to 3, wherein the electronic device comprises a light propagation framework configured to output hologram images predicted to be formed by light modulated by the mask for each of the alignment errors with respect to the holograms, when sequentially providing the holograms to the spatial light modulator within the preset time, and wherein the at least one processor is configured to:

by superimposing the hologram images for each of the alignment errors, obtain the superimposed hologram images;

obtain a loss function based on errors between the superimposed hologram images and the target hologram image; and

obtain the plurality of holograms that minimize the loss function using a gradient descent method.

5. The electronic device of claim 4, wherein the at least one processor is configured to:
based on a probability distribution function, set weights to the errors between the superimposed hologram images and the target hologram image such that a weight for an error is higher as an alignment error corresponding to the error is smaller.

6. The electronic device of claim 4, wherein the light propagation framework is configured to output hologram images predicted to be formed by light modulated by the mask, based on phase errors between phases modulated by pixels included in the mask and phases set when the mask is designed, for each of the alignment errors with respect to the holograms.

7. The electronic device of any one of claims 1 to 6, wherein the at least one processor is configured to receive the target hologram image from a server wirelessly connected to the electronic device through a communication circuit or obtain the target hologram image from the memory.

8. The electronic device of any one of claims 1 to 7, wherein the at least one processor is configured to set, based on a user input, the target hologram image and a number of alignment errors that can occur between the spatial light modulator and the mask.

9. The electronic device of any one of claims 1 to 8, wherein the at least one processor is configured to determine the number of the plurality of holograms based on a refresh rate of the spatial light modulator.

10. A method for providing a hologram image in an electronic device, the method comprising:

obtaining a plurality of holograms by performing training based on a target hologram image and alignment errors that can occur between a spatial light modulator and a mask of the electronic device; and

controlling the spatial light modulator to output a pattern based on the obtained plurality of holograms such that light emitted from a light source of the electronic device is modulated, wherein the light modulated by the spatial light modulator is modulated by the mask of the electronic device such that a plurality of hologram images corresponding to the plurality of holograms are sequentially formed within a preset time.

11. The method of claim 10, wherein obtaining the plurality of holograms comprises:

obtaining, for each of the alignment errors with respect to a plurality of first holograms, a plurality of first hologram images predicted to be formed by the light modulated by the mask when sequentially providing the plurality of first holograms to the spatial light modulator within the preset time;

obtaining a plurality of second hologram images by superimposing the plurality of first hologram images for each of the alignment errors;

obtaining a loss based on errors between the plurality of second hologram images and the target hologram image; and

obtaining the plurality of holograms based on the loss.

12. The method of claim 11, wherein obtaining the plurality of first hologram images comprises:

obtaining hologram images including pixels having pixel values identical to the pixel values of the pixels of the target hologram image and having phases at least partially different from the phases of the pixels of the target hologram image; and

obtaining the plurality of first holograms by applying the obtained hologram images to an inverse wave function.

13. The method of any one of claims 10 to 12, wherein the electronic device comprises a light propagation framework configured to output hologram images predicted to be formed by light modulated by the mask for each of the alignment errors with respect to the holograms, when sequentially providing the holograms to the spatial light modulator within the preset time, and

wherein the method further comprises:

by superimposing the hologram images for each of the alignment errors, obtaining the superimposed hologram images;

obtaining a loss function based on errors between the superimposed hologram images and the target hologram image; and

obtaining the plurality of holograms that minimize the loss function using a gradient descent method.

14. The method of claim 13, wherein obtaining the loss function comprises setting, based on a probability distribution function, weights to the errors between the superimposed hologram images and the target hologram image such that a weight for an error is higher as an alignment error corresponding to the error is smaller.

15. The method of claim 13, wherein the light propagation framework is configured to output hologram images predicted to be formed by light modulated by the mask, based on phase errors between phases modulated by pixels included in the mask and phases set when the mask is designed, for each of the alignment errors with respect to the holograms.

# FIG. 1

FIG. 2

301

Electronic device

310

Light source

320

Spatial light
modulator

350

Processor

340

Memory

330

Mask

FIG. 3

FIG. 4

500

START

OBTAIN TARGET HOLOGRAM IMAGE ~ 501

OBTAIN PLURALITY OF HOLOGRAMS
BY PERFORMING TRAINING ~ 503

CONTROL SPATIAL LIGHT MODULATOR ~ 505

END

FIG. 5

600

START

OBTAIN PLURALITY OF FIRST HOLOGRAM IMAGES ~ 601

OBTAIN PLURALITY OF SECOND HOLOGRAM IMAGES ~ 603

OBTAIN LOSS ~ 605

OBTAIN PLURALITY OF HOLOGRAMS ~ 607

END

FIG. 6

FIG. 7

EP 4 787 082 A1

FIG. 8A

EP 4 787 082 A1

FIG. 8B

FIG. 9

FIG. 10

FIG. 11

FIG. 12

1300

```
            ┌─────────┐
            │  START  │
            └─────────┘
                 │
                 ▼
┌───────────────────────────────────────┐
│      OBTAIN TARGET HOLOGRAM IMAGE      │──1301
└───────────────────────────────────────┘
                 │
                 ▼
┌───────────────────────────────────────┐
│       OBTAIN PLURALITY OF HOLOGRAMS    │──1303
│    USING ARTIFICIAL INTELLIGENCE MODEL │
└───────────────────────────────────────┘
                 │
                 ▼
┌───────────────────────────────────────┐
│       CONTROL SPATIAL LIGHT MODULATOR  │──1305
└───────────────────────────────────────┘
                 │
                 ▼
            ┌─────────┐
            │   END   │
            └─────────┘
```

# FIG. 13

FIG. 14

FIG. 15

FIG. 16

## INTERNATIONAL SEARCH REPORT

| International application No. |
| --- |
| **PCT/KR2024/096506** |

**A. CLASSIFICATION OF SUBJECT MATTER**

**G03H 1/26**(2006.01)i; **G03H 1/04**(2006.01)i; **G03H 1/12**(2006.01)i; **G03H 1/02**(2006.01)i

According to International Patent Classification (IPC) or to both national classification and IPC

**B. FIELDS SEARCHED**

Minimum documentation searched (classification system followed by classification symbols)

G03H 1/26(2006.01); G02B 27/01(2006.01); G02F 1/1335(2006.01); G03H 1/02(2006.01): G03H 1/22(2006.01); G06F 3/16(2006.01); G06N 20/00(2019.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 홀로그램(hologram), 이미지(image), 정렬(align), 오차(error), 학습(learning)

**C. DOCUMENTS CONSIDERED TO BE RELEVANT**

| Category* | Citation of document, with indication, where appropriate, of the relevant passages | Relevant to claim No. |
| --- | --- | --- |
| Y | KR 10-2023-0093202 A (ELECTRONICS AND TELECOMMUNICATIONS RESEARCH INSTITUTE) 27 June 2023 (2023-06-27)<br>See paragraph [0065]; claims 1-5; and figures 1-2a. | 1,7-10 |
| A | | 2-6,11-15 |
| Y | KR 10-2022-0169982 A (SAMSUNG DISPLAY CO., LTD.) 29 December 2022 (2022-12-29)<br>See claims 3 and 10. | 1,7-10 |
| Y | KR 10-2236914 B1 (CELLBIG CO., LTD.) 06 April 2021 (2021-04-06)<br>See claim 1. | 7 |
| A | KR 10-2278465 B1 (SEEREAL TECHNOLOGIES S.A.) 16 July 2021 (2021-07-16)<br>See claims 1-8. | 1-15 |
| A | US 2019-0163131 A1 (NORTH INC.) 30 May 2019 (2019-05-30)<br>See paragraphs [0098]-[0102]; and figure 6. | 1-15 |

☐ Further documents are listed in the continuation of Box C.　　☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **17 February 2025** | **18 February 2025** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

International application No.

**PCT/KR2024/096506**

| Patent document cited in search report | | | Publication date (day/month/year) | Patent family member(s) | | | Publication date (day/month/year) |
|---|---|---|---|---|---|---|---|
| KR | 10-2023-0093202 | A | 27 June 2023 | KR | 10-2745822 | B1 | 24 December 2024 |
| | | | | US | 11768463 | B2 | 26 September 2023 |
| | | | | US | 2020-0409307 | A1 | 31 December 2020 |
| KR | 10-2022-0169982 | A | 29 December 2022 | | None | | |
| KR | 10-2236914 | B1 | 06 April 2021 | WO | 2021-085708 | A1 | 06 May 2021 |
| KR | 10-2278465 | B1 | 16 July 2021 | CN | 102483604 | A | 30 May 2012 |
| | | | | CN | 102483604 | B | 20 August 2014 |
| | | | | EP | 2446324 | A1 | 02 May 2012 |
| | | | | JP | 2012-530951 | A | 06 December 2012 |
| | | | | KR | 10-1720759 | B1 | 28 March 2017 |
| | | | | KR | 10-1871345 | B1 | 27 June 2018 |
| | | | | KR | 10-2012-0052239 | A | 23 May 2012 |
| | | | | KR | 10-2017-0036129 | A | 31 March 2017 |
| | | | | KR | 10-2018-0071424 | A | 27 June 2018 |
| | | | | KR | 10-2020-0075034 | A | 25 June 2020 |
| | | | | KR | 10-2125485 | B1 | 23 June 2020 |
| | | | | US | 10234821 | B2 | 19 March 2019 |
| | | | | US | 11366426 | B2 | 21 June 2022 |
| | | | | US | 12055890 | B2 | 06 August 2024 |
| | | | | US | 2012-0092735 | A1 | 19 April 2012 |
| | | | | US | 2019-0278225 | A1 | 12 September 2019 |
| | | | | US | 2022-0326654 | A1 | 13 October 2022 |
| | | | | WO | 2010-149588 | A1 | 29 December 2010 |
| US | 2019-0163131 | A1 | 30 May 2019 | US | 11003134 | B2 | 11 May 2021 |
| | | | | US | 11003135 | B2 | 11 May 2021 |
| | | | | US | 11409238 | B2 | 09 August 2022 |
| | | | | US | 11422505 | B2 | 23 August 2022 |
| | | | | US | 2019-0163126 | A1 | 30 May 2019 |
| | | | | US | 2019-0163127 | A1 | 30 May 2019 |
| | | | | US | 2019-0163128 | A1 | 30 May 2019 |
| | | | | US | 2019-0163129 | A1 | 30 May 2019 |
| | | | | US | 2019-0163130 | A1 | 30 May 2019 |

Form PCT/ISA/210 (patent family annex) (July 2022)